# EUROPEAN PATENT APPLICATION

(11) **EP 2 573 376 A1**
(43) Date of publication of application: **27.03.2013**
(21) Application number: 11783371.5
(22) Date of filing: 18.04.2011
(51) Int. Cl.: F02M 25/00, F02M 21/02, F02M 27/02

(54) **AMMONIA-BURNING INTERNAL COMBUSTION ENGINE**

(30) Priority: 21.05.2010 US 78503410
(71) Applicant: TOYOTA JIDOSHA KABUSHIKI KAISHA, Toyota-shi, Aichi-ken, 471-8571 (JP)
(72) Inventor: ASO, Koji, Toyota-shi Aichi 471-8571 (JP); FUJIWARA, Takahiko, Toyota-shi Aichi 471-8571 (JP); TANAKA, Hiroshi, Toyota-shi Aichi 471-8571 (JP)
(74) Representative: TBK
(86) International application number: PCT/JP2011/059991
(87) International publication number: WO 2011/145434

(57) **Abstract**

Inside of a combustion chamber, ammonia is made to burn well. Inside of the combustion chamber 5, in addition to ammonia, reformed gas which is reformed inside of the reformer 20 is fed. When the reforming ability of the reformer 20 is a predetermined reforming ability or less, the ammonia ratio is made to increase over the ammonia ratio after completion of warmup which is preset according to the operating state of the engine, and secondary air is fed from the secondary air feed device 37 into the engine exhaust passage upstream of the exhaust purification catalyst 19.

## Description

### Technical Field

The present invention relates to an ammonia burning internal combustion engine.

### Background Art

In the past, in internal combustion engines, mainly fossil fuels have been used as fuel. However, in this case, if burning the fuel, CO₂ is produced, which causes the advance of global warming. As opposed to this, even if burning ammonia, no CO₂ is produced at all. Therefore, to prevent CO₂ from being produced, an internal combustion engine is known which uses ammonia as fuel (see Patent Literature 1).

However, ammonia is harder to burn compared with fossil fuels. Therefore, when using ammonia as a fuel, some sort of measure is required for making the ammonia easier to burn. Therefore, in the above-mentioned internal combustion engine, the exhaust heat is utilized to reform the ammonia and thereby produce reformed gas from hydrogen and nitrogen, the hydrogen in the produced reformed gas is stored in a hydrogen storage alloy, and the combustion chamber is fed with not only ammonia, but also the hydrogen which is stored in the hydrogen storage alloy to thereby enable easy burning even when using ammonia as a fuel.

### Citation List

### Patent Literature

Patent Literature 1: Japanese Patent
Publication (A) No. 5-332152

### Summary of Invention

### Technical Problem

However, if using a hydrogen storage alloy, not only does the weight become heavier, but also control for making the hydrogen storage alloy store the hydrogen and control for making the hydrogen storage alloy release the stored hydrogen are necessary, so the system for treating the hydrogen becomes complicated. Therefore, the actual situation is that the industry does not want to use hydrogen storage alloys much at all. In this regard, if not using a hydrogen storage alloy, when, like at the time of engine startup, the reformer is low in temperature and therefore the reformer is low in reforming ability, the required sufficient hydrogen cannot be obtained and therefore some sort of measure becomes required.

### Solution to Problem

Therefore, in the present invention, there is provided an ammonia burning internal combustion engine which uses ammonia as fuel, wherein a reformer which reforms ammonia to produce reformed gas which contains hydrogen is provided, the reformed gas is fed to an inside of a combustion chamber in addition to ammonia, an exhaust purification catalyst is arranged in an engine exhaust passage, a secondary air feed device is arranged in the engine exhaust passage upstream of the exhaust purification catalyst, an ammonia ratio which shows a ratio of an amount of fed ammonia to a total amount of fed fuel after completion of warmup is preset in accordance with an operating state of the engine, and when a reforming ability of the reformer is less than a predetermined reforming ability, the ammonia ratio is made to increase to more than the ammonia ratio after completion of warmup which is preset in accordance with the operating state of the engine, and secondary air is fed from a secondary air feed device to inside the engine exhaust passage upstream of the exhaust purification catalyst.

### Advantageous Effects of Invention

When the reforming ability of the reformer is a predetermined reforming ability or less, the ammonia ratio is made to increase over the ammonia ratio after completion of warmup, which is preset in accordance with the operating state of the engine, so as to give good combustion even if sufficient hydrogen is not produced at the reformer. At this time, the unburned ammonia which is exhausted from the combustion chamber increases, but this unburned ammonia is made to oxidize by the secondary air which is fed from the secondary air feed device.

### Brief Description of the Drawings

FIG. 1 is an overview of an internal combustion engine.
FIG. 2 is a view which shows an ammonia ratio RA.
FIG. 3 is a time chart which shows changes in the ammonia ratio RA etc.
FIG. 4 is a flow chart for operational control.
FIG. 5 is a time chart which shows changes in the ammonia ratio RA etc.
FIG. 6 is a flow chart for operational control.
FIG. 7 is a flow chart for operational control.
FIG. 8 is a flow chart for operational control.

### Description of Embodiments

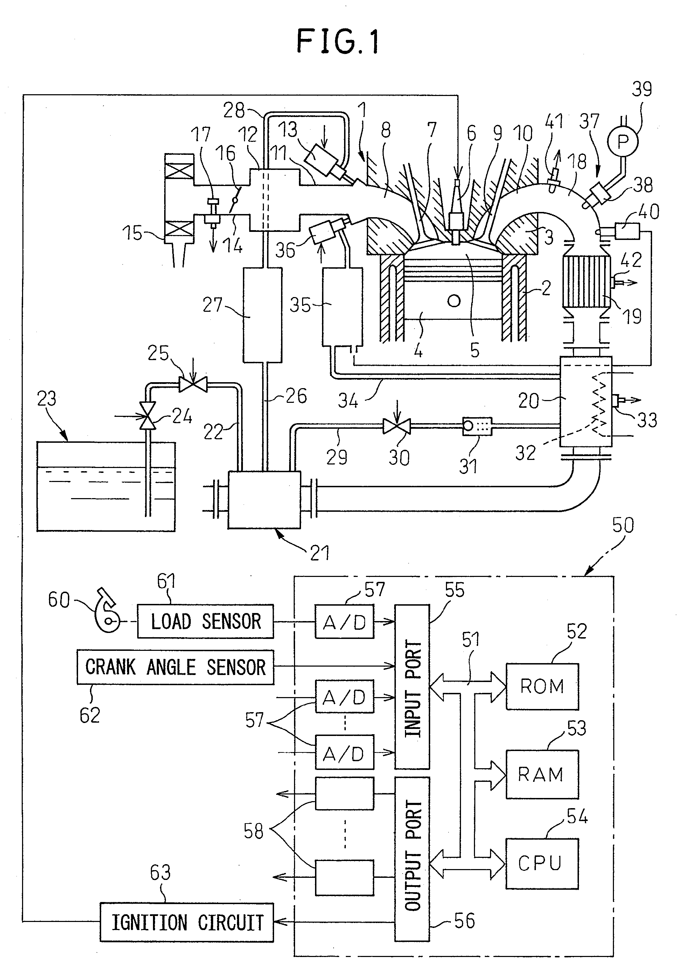

Referring to FIG. 1, 1 indicates an internal combustion engine body, 2 a cylinder block, 3 a cylinder head, 4 a piston, 5 a combustion chamber, 6 a plasma jet ignition plug which is arranged at the center of the top surface of the combustion chamber 5 and emits a plasma jet, 7 an intake valve, 8 an intake port, 9 an exhaust valve, and 10 an exhaust port. The intake port 8 is connected through an intake branch pipe 11 to a surge tank 12. In each intake branch pipe 11, an ammonia injector 13 for injecting gaseous ammonia toward the interior of each corresponding intake port 8 is arranged.

The surge tank 12 is connected through an intake duct 14 to an air cleaner 15. In the intake duct 14, a throttle valve 16 which is driven by an actuator and an intake air amount detector 17 using for example a hot wire are arranged. On the other hand, the exhaust port 10 is connected through an exhaust manifold 18 to an exhaust purification catalyst 19 which has an oxidation function. In the embodiment which is shown in FIG. 1, a reformer 20 and an vaporizer 21 are arranged in the exhaust passage downstream of the exhaust purification catalyst 19.

The vaporizer 21 is connected through an ammonia inflow pipe 22 to a fuel tank 23. Inside of this ammonia inflow pipe 22, a shutoff valve 24 which is opened at the time of engine operation and is closed when the engine stops and a pressure regulator 25 are arranged. The fuel tank 23 is filled inside it with 0.8 MPa to 1.0 MPa or so high pressure liquid ammonia. The liquid ammonia inside of the fuel tank 23 is fed through the ammonia inflow pipe 22 to the inside of the vaporizer 21. In the embodiment which is shown in FIG. 1, the vaporizer 21 is formed to be heated by the exhaust gas, therefore the liquid ammonia which is fed to the inside of the vaporizer 21 is made to vaporize inside of the vaporizer 21.

The gaseous ammonia which is made to vaporize inside of the vaporizer 21 is fed through an ammonia outflow pipe 26 to an ammonia gas tank 27. The gaseous ammonia inside of the ammonia gas tank 27 is fed through a gaseous ammonia feed pipe 28 to the ammonia injector 13. The gaseous ammonia is injected from the ammonia injector 13 toward the corresponding intake port 8.

On the other hand, the vaporizer 21 is connected through an ammonia outflow pipe 29 to the reformer 20. Inside this ammonia outflow pipe 29, a reformer control valve 30 which opens when the reformer 20 performs a reforming action and a check valve 31 which allows flow only from the carburetor 21 to the reformer 20 are arranged in series. If the reformer control valve 30 opens and the pressure inside of the reformer 20 becomes lower than the pressure inside of the carburetor 21, the gaseous ammonia inside of the vaporizer 21 is fed through the ammonia outflow pipe 29 to the inside of the reformer 20.

In the embodiment which is shown in FIG. 1, the reformer 20 is configured so as to be heated by the exhaust gas. Furthermore, this reformer 20 is provided with an electric heater 32. Further, inside of this reformer 20, a catalyst is arranged for promoting the reforming action of the ammonia. A temperature sensor 33 for detecting the temperature is arranged in the reformer 20.

If the temperature inside of the reformer 20 becomes the temperature at which the reforming action of ammonia is performed, for example, several hundred degrees, the ammonia which is fed from the vaporizer 21 to the inside of the reformer 20 is broken down into hydrogen and nitrogen (2NH₃→N₂+3H₂), that is, is reformed. As a result, inside the reformer 20, reformed gas which includes hydrogen is produced. If the ammonia is broken down into hydrogen and nitrogen, the mole number becomes double. Further, due also to the heat of expansion of the reformed gas due to the heating action, the pressure inside of the reformer 20 rises. This raised pressure reformed gas is fed through a reformed gas feed pipe 34 to the inside of a reformed gas storage tank 35.

As shown in FIG. 1, at each intake branch pipe 11, a reformed gas injector 36 is arranged for injecting reformed gas toward the inside of the corresponding intake port 8. The reformed gas which is stored inside of the reformed gas storage tank 35 is fed to the reformed gas injector 36. From each reformed gas injector 36, reformed gas is injected toward the inside of the corresponding intake port 8.

As shown in FIG. 1, a secondary air feed device 37 is arranged in the engine exhaust passage upstream of the exhaust purification catalyst 19, that is, inside of the exhaust manifold 18. This secondary air feed device 37 is comprised of a secondary air feed valve 38 for feeding secondary air to the inside of the exhaust manifold 18 and an air pump 39 for feeding secondary air to this secondary air feed valve 38. Further, inside the exhaust manifold 18, an auxiliary fuel feed valve 40 is arranged. In the embodiment which is shown in FIG. 1, the reformed gas inside of the reformed gas storage tank 35 is fed to the auxiliary fuel feed valve 40. Further, inside of the exhaust manifold 18, an ammonia concentration sensor 41 is arranged for detecting the concentration of ammonia in the exhaust gas which is exhausted from the combustion chamber 5. At the exhaust purification catalyst 19, a temperature sensor 42 is mounted for detecting the temperature of the exhaust purification catalyst 19.

An electronic control unit 50 is comprised of a digital computer provided with a ROM (read only memory) 52, a RAM (random access memory) 53, a CPU (microprocessor) 54, an input port 55, and an output port 56, which are connected to each other by a bi-directional bus 51. An output signal of the intake air amount detector 17, an output signal of the ammonia concentration sensor 41, and output signals of the temperature sensors 33, 42 are input to the input port 55 through corresponding AD converters 57. Further, an accelerator pedal 60 is connected to a load sensor 61 generating an output voltage proportional to the amount of depression L of the accelerator pedal 60. The output voltage of the load sensor 61 is input through a corresponding AD converter 57 to the input port 55. Further, the input port 55 is connected to a crank angle sensor 62 generating an output pulse each time a crankshaft rotates by for example 30°. On the other hand, the output port 56 is connected to an ignition circuit 63 of the plasma jet ignition device 6. Furthermore, the output port 56 is connected through a corresponding drive circuit 58 to the ammonia injector 13, the drive actuator of the throttle valve 16, shut-off valve 24, pressure regulator 25, reformer control valve 31, electric heater 32, reformed gas injector 36, secondary air feed valve 38, air pump 39, and auxiliary fuel feed valve 40.

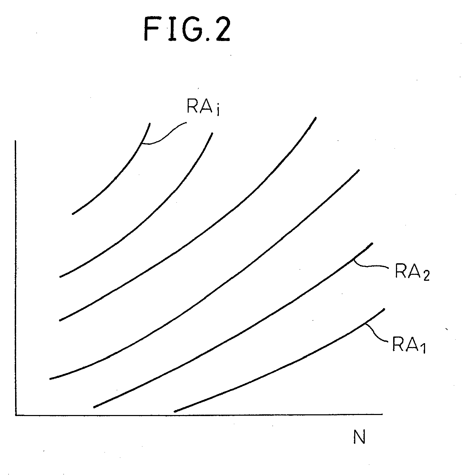

FIG. 2 shows the ammonia ratio RA (%) which shows the ratio of the amount of fed ammonia to the total amount of fed fuel after warmup is completed. The solid lines RA₁, RA₂, ... RAi in FIG. 2 show the equivalent ammonia ratio lines. From RA₁ toward RAi, the ammonia ratio becomes larger. Note that in FIG. 2, the ordinate L shows the engine load, while the abscissa N shows the engine speed.

Ammonia is harder to burn than reformed gas. Therefore, to make the mixed gas of ammonia and reformed gas ignite well and burn in the combustion chamber 5, it is necessary to make the ammonia ratio smaller as the mixed gas temperature at the time of ignition, is low. Therefore, in this embodiment according to the present invention, as shown in FIG. 2, the more the engine load L falls, the more the ammonia ratio RA is lowered and the higher the engine speed N becomes, the more the ammonia ratio RA can be lowered.

That is, the more the engine load L falls, the smaller the opening degree of the throttle valve 16 is made, so the compression end pressure inside of the combustion chamber 5 becomes lower the more the engine load L falls. Therefore, the temperature of the mixed gas inside the combustion chamber 5 at the end of the compression stroke in which ignition is performed becomes lower the more the engine load L falls. Therefore, as shown in FIG. 2, the ammonia ratio RA is made to fall the more the engine load L falls.

On the other hand, the ignition timing is advanced more the higher the engine speed N becomes. Therefore, the pressure inside of the combustion chamber 5 at the time when ignition is performed becomes lower the higher the engine speed N becomes. Therefore, the temperature of the mixed gas inside the combustion chamber 5 at the time when combustion is performed becomes lower the higher the engine speed N becomes and therefore, as shown in FIG. 2, the ammonia ratio RA is made to fall the higher the engine speed N becomes. In this embodiment according to the present invention, the ammonia ratio RA which is shown in FIG. 2 is stored in advance inside the ROM 52. After warmup is completed, the ammonia ratio RA which is stored is used as the ammonia ratio.

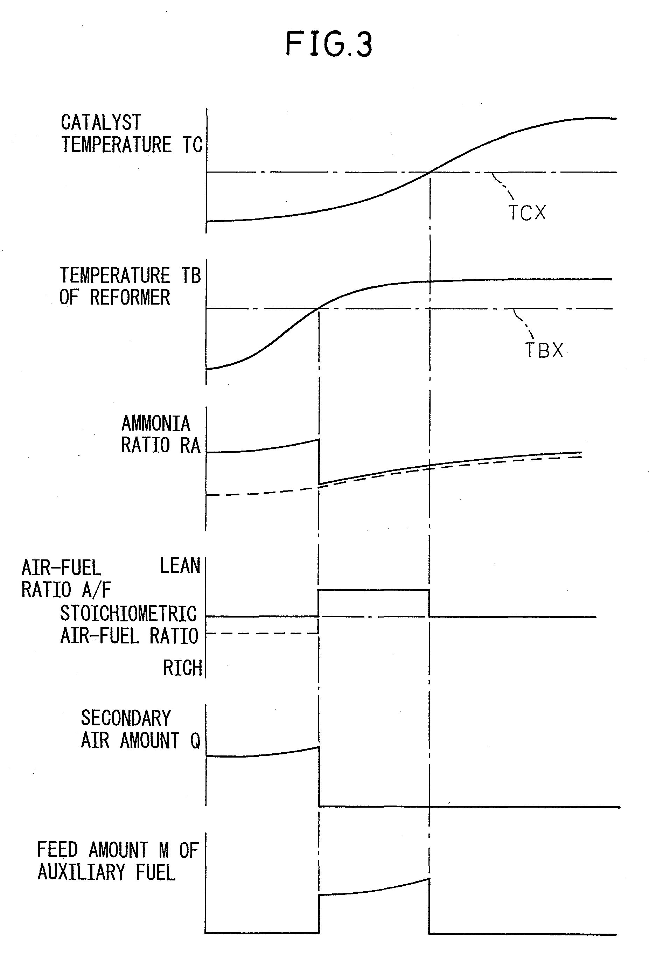

Next, while referring to the time chart which is shown in FIG. 3, a first embodiment of operational control according to the present invention will be explained. Note that, FIG. 3 shows the changes in the catalyst temperature TC of the exhaust purification catalyst 19, the temperature TB of the reformer 20, the ammonia ratio RA of the fuel which is fed to the combustion chamber 5, the air-fuel ratio A/F in the combustion chamber 5, the amount of secondary air Q which is fed from the secondary air feed valve 38, and the auxiliary fuel which is fed from the auxiliary fuel feed valve 40, that is, the amount of feed M of the reformed gas, from the time right after engine startup. Note that, in FIG. 3, TCX shows the activation temperature of the exhaust purification catalyst 19. Further, in the present invention, it is judged if the reformer 20 has a predetermined reforming ability, for example, whether the reformer 20 has a reforming ability which enables production of a predetermined amount of hydrogen. In the embodiment of the present invention, when the temperature TB of the reformer 20 exceeds the predetermined set temperature TBX which is shown in FIG. 3, it is judged that the reformer 20 has the predetermined reforming ability.

Now, at the time right after engine startup, as shown in FIG. 3, the catalyst temperature TC is low and the temperature TB of the reformer 20 is also low. That is, right after engine startup, the reforming ability of the reformer 20 is less than the predetermined reforming ability. Therefore, in the reformer 20, a sufficient amount of hydrogen cannot be produced. At this time, the reformed gas injector 36 injects from it reformed gas which is stored inside the reformed gas storage tank 35, but there are limits to the amount of reformed gas which can be stored inside the reformed gas storage tank 35. That is, right after engine startup, the reformed gas is insufficient.

On the other hand, as will be understood from FIG. 2, the ammonia ratio RA which gives good combustion is determined by the operating state of the engine, that is, the engine load L and the engine speed N. However, when the reformed gas is insufficient, even if the ammonia ratio is made the ammonia ratio RA which is determined from the operating state of the engine, the necessary amount of reformed gas cannot be secured, so good combustion becomes impossible.

Therefore, in the present invention, when the reforming ability of reformer 20 is less than the predetermined reforming ability, the ammonia ratio is made to increase over the ammonia ratio RA after completion of warmup, shown by the broken line in FIG. 3, which is preset in accordance with the operating state of the engine, that is, is made to increase over the ammonia ratio RA which is shown by the map of FIG. 2. If the ammonia ratio RA is increased, the required amount of reformed gas decreases and therefore the required amount of reformed gas can be sufficiently secured.

On the other hand, as will be understood from FIG. 2, to obtain good combustion when the ammonia ratio RA increases, the engine load L has to be raised. Therefore, in this embodiment according to the present invention, when the ammonia ratio RA is increased, the engine load L is increased. This increase of the engine load L is performed by increasing the opening degree of the throttle valve 16. Further, in this embodiment according to the present invention, if increasing the ammonia ratio RA in this way, as shown in FIG. 3 by the solid line, the air-fuel ratio A/F is made the stoichiometric air-fuel ratio.

On the other hand, when the reforming ability of the reformer 20 is less than the predetermined reforming ability, as shown in FIG. 3 by the broken line, the air-fuel ratio can be made rich. At this time, the ammonia feed rate is made to increase. Further, at this time, the engine load L is also made to increase.

On the other hand, if the ammonia ratio RA is made to increase in this way, the amount of unburned ammonia which is exhausted from the combustion chamber 5 increases. Therefore, in the present invention, when the ammonia ratio RA is made to increase, to make this unburned ammonia oxidize, secondary air is fed from the secondary air feed device 37 to inside the engine exhaust passage upstream of the exhaust purification catalyst 19. At this time, the exhaust purification catalyst 19 is not activated, but the unburned ammonia is oxidized relatively well if secondary air is fed even if the exhaust purification catalyst 19 is not activated.

On the other hand, in this first embodiment, when the reforming ability of the reformer 20 becomes more than the predetermined reforming ability, until the exhaust purification catalyst 19 is activated, that is, until the temperature TC of the exhaust purification catalyst 19 exceeds the activation temperature TCX, the air-fuel ratio A/F is made lean and auxiliary fuel is fed into the engine exhaust passage upstream of the exhaust purification catalyst 19 from the auxiliary fuel feed valve 40. That is, at this time, the exhaust gas contains excess oxygen, so the fed auxiliary fuel is made to oxidize on the exhaust purification catalyst 19. The heat of oxidizing reaction at this time causes the temperature of the exhaust purification catalyst 19 to rise.

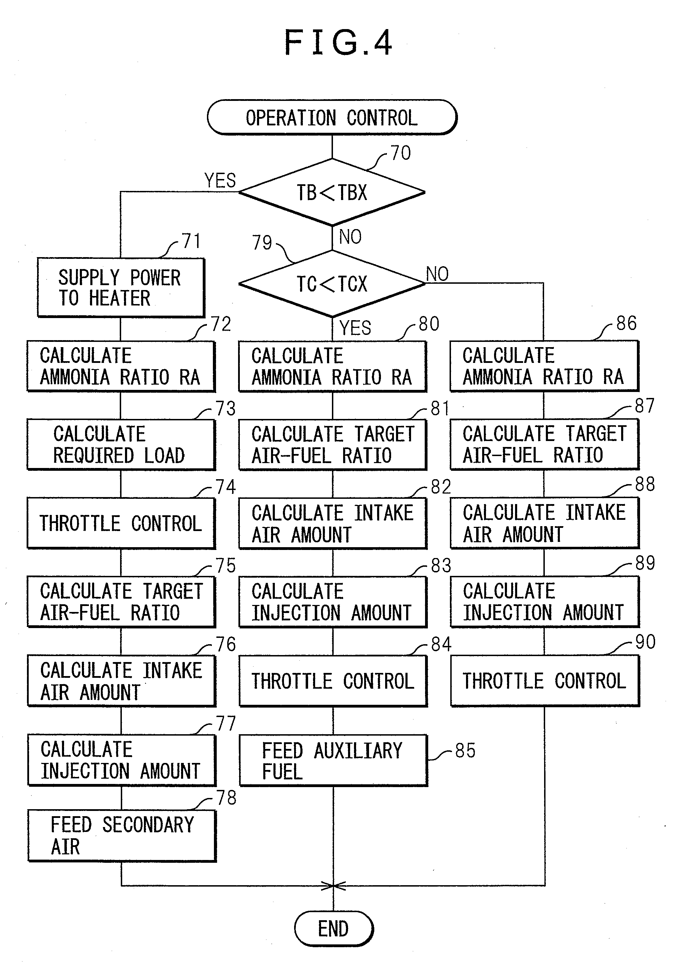

FIG. 4 shows the operational control routine for working the first embodiment which is shown in FIG. 3.
Referring to FIG. 4, first, at step 70, it is judged if the temperature TB of the reformer 20 is lower than the predetermined set temperature TBX. When TB<TBX, the routine proceeds to step 71 where the electric heater 32 of the reformer 20 is energized, whereby the heating action of the reformer 20 is started. Next, at step 72, the ammonia ratio RA is calculated. This ammonia ratio RA is made a value which is larger than the ammonia ratio after completion of warmup which is shown in FIG. 2.

Next, at step 73, the calculated ammonia ratio RA is used to calculate the demanded load which gives good combustion. Next, at step 74, the opening degree of the throttle valve 16 is controlled so that the engine load satisfies this demanded load. At this time, the opening degree of the throttle valve 16 becomes larger and the engine load also becomes larger. Next, at step 75, the target air-fuel ratio is calculated. This target air-fuel ratio is the stoichiometric air-fuel ratio or the rich air-fuel ratio. Next, at step 76, the intake air amount is calculated from the output signal of the intake air amount detector 17.

Next, at step 77, the calculated ammonia ratio RA, target air-fuel ratio, and intake air amount are used as the basis to calculate the amount of ammonia to be injected from the ammonia injector 13 and the amount of reformed gas to be injected from the reformed gas injector 36. Based on these calculated values, the ammonia and reformed gas are injected from the ammonia injector 13 and the reformed gas injector 36. Next, at step 78, secondary air is fed from the secondary air feed valve 38.

On the other hand, when it is judged at step 70 that TB≥TBX, that is, when the reformer 20 starts to produce hydrogen, the routine proceeds to step 79. At this time, the energizing of the electric heater 32 is stopped. At step 79, it is judged if the catalyst temperature TC is lower than the activation temperature TCX. When TC<TCX, the routine proceeds to step 80 where the ammonia ratio RA is calculated from the map which is shown in FIG. 2. Next, at step 81, the target air-fuel ratio is calculated. At this time, the target air-fuel ratio is made the lean air-fuel ratio. Next, at step 82, the intake air amount is calculated from the output signal of the intake air amount detector 17.

Next, at step 83, the calculated ammonia ratio RA, target air-fuel ratio, and intake air amount are used as the basis to calculate the amount of ammonia to be injected from the ammonia injector 13 and the amount of reformed gas to be injected from the reformed gas injector 36. Based on these calculated values, the ammonia and reformed gas are injected from the ammonia injector 13 and the reformed gas injector 36. Next, at step 84, the opening degree of the throttle valve 16 is controlled to the throttle valve opening degree in accordance with the engine load. Next, at step 85, auxiliary fuel is fed from the auxiliary fuel feed valve 40.

On the other hand, if it is judged at step 79 that TC≥TCX, that is, if the exhaust purification catalyst 19 is activated, the routine proceeds to step 86 where the ammonia ratio RA is calculated from the map which is shown in FIG. 2. Next, at step 87, the target air-fuel ratio is calculated. At this time, the target air-fuel ratio is made the stoichiometric air-fuel ratio. Next, at step 88, the intake air amount is calculated from the output signal of the intake air amount detector 17.

Next, at step 89, the calculated ammonia ratio RA, target air-fuel ratio, and intake air amount are used as the basis to calculate the amount of ammonia to be injected from the ammonia injector 13 and the amount of reformed gas to be injected from the reformed gas injector 36. Based on these calculated values, the ammonia and reformed gas are injected from the ammonia injector 13 and the reformed gas injector 36. Next, at step 90, the opening degree of the throttle valve 16 is controlled to the throttle valve opening degree in accordance with the engine load.

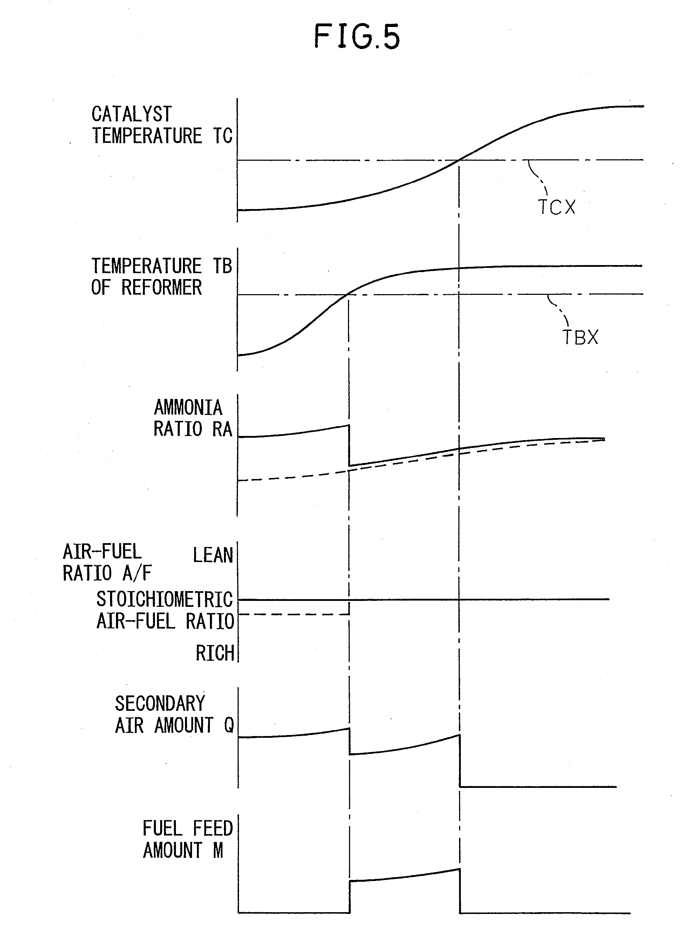

FIG. 5 shows a second embodiment. In this second embodiment, the difference from the first embodiment which is shown in FIG. 3 is that in the period after TB≥TBX to when TC≥TCX, the air-fuel ratio A/F is made the stoichiometric air-fuel ratio and secondary air is fed. That is, in this second embodiment, when the reforming ability of the reformer 20 becomes more than the predetermined reforming ability, until the exhaust purification catalyst 19 is activated, secondary air and auxiliary fuel are fed into the engine exhaust passage upstream of the exhaust purification catalyst 19.

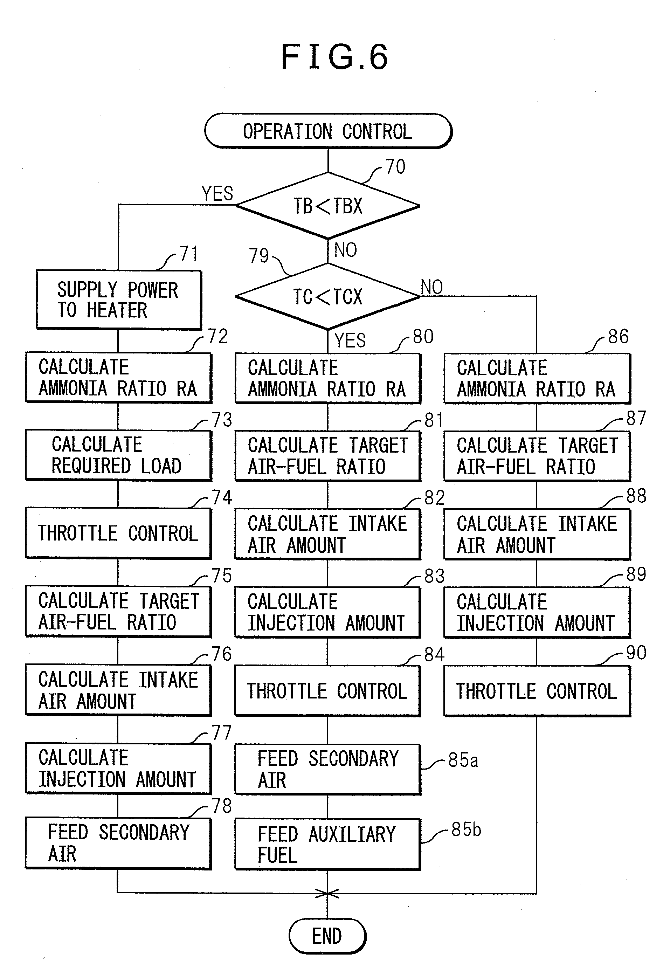

FIG. 6 shows the operational control routine for working this second embodiment. The operational control routine which is shown in FIG. 6 and the operational control routine which is shown in FIG. 4 differ only in step 81 and step 85 which are shown in FIG. 4. Therefore, only these different parts will be explained

That is, at step 81 of FIG. 4, the target air-fuel ratio is made the lean air-fuel ratio, while at step 81 of FIG. 6, the target air-fuel ratio is made the stoichiometric air-fuel ratio. On the other hand, in FIG. 6, instead of step 85 of FIG. 4, two steps 85a, 85b are provided. In this case, at step 85a, secondary air is fed from the secondary air feed valve 38, while at step 85b, auxiliary fuel is fed from the auxiliary fuel feed valve 40.

Next, a third embodiment will be explained. In this third embodiment, the concentration of ammonia in the exhaust gas which is exhausted from the combustion chamber 5 is detected by the ammonia concentration sensor 41 and, when this ammonia concentration exceeds a predetermined allowable concentration, secondary air is fed into the engine exhaust passage. That is, in this third embodiment, even after the exhaust purification catalyst 19 is activated, secondary air is fed to cause the unburned ammonia to oxidize.

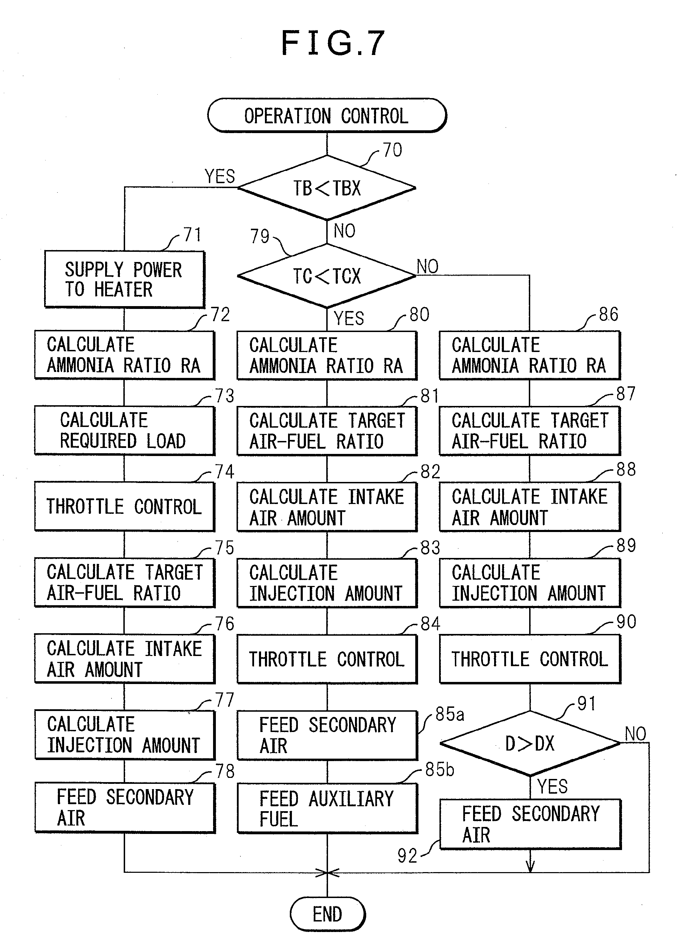

FIG. 7 shows the operational control routine for working this third embodiment. Step 70 to step 90 in the operational control routine shown in FIG. 7 is exactly the same as step 70 to step 90 in the operational control routine shown in FIG. 6. The routine shown in FIG. 7 and the routine shown in FIG. 6 differ only in that, in FIG. 7, after step 90, the two steps 91 and 92 are added.

That is, in the routine which is shown in FIG. 7, at step 91, it is judged if the concentration D of ammonia which is exhausted from the combustion chamber 5 is higher than a predetermined allowable concentration DX. When D>DX, the routine proceeds to step 91 where secondary air is fed from the secondary air feed valve 38.

Next, a fourth embodiment will be explained. In this fourth embodiment, when the temperature TC of the exhaust purification catalyst 19 exceeds a predetermined limit temperature Tmax, the air-fuel ratio is made rich to prevent the exhaust purification catalyst 19 from deteriorating due to heat. If the air-fuel ratio is made rich, the amount of unburned fuel inside of the combustion chamber 5 increases and the heat of combustion is consumed for raising the temperature of the unburned fuel, so the exhaust gas temperature falls. Therefore, the exhaust purification catalyst 19 can be prevented from deteriorating due to heat. However, if the air-fuel ratio is made rich, the amount of unburned ammonia which is exhausted from the inside of the combustion chamber 5 increases, so secondary air is fed into the engine exhaust passage to make this unburned ammonia oxidize.

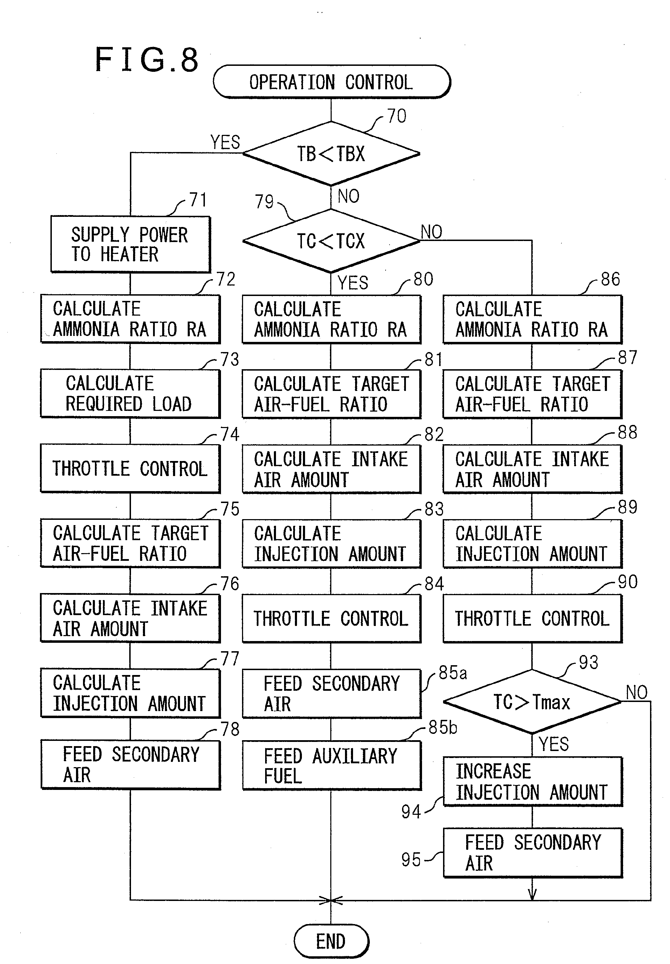

FIG. 8 shows an operational control routine for working this fourth embodiment. Step 70 to step 90 in the operational control routine shown in FIG. 8 is exactly the same as step 70 to step 90 in the operational control routine shown in FIG. 6. The routine shown in FIG. 8 and the routine shown in FIG. 6 differs only in that after step 90 in FIG. 8, three steps 93, 94, and 95 are added.

That is, in the routine which is shown in FIG. 8, at step 93, it is judged if the temperature TC of the exhaust purification catalyst 19 exceeds the predetermined limit temperature Tmax. When TC>Tmax, the routine proceeds to step 94 where the amount of ammonia which is injected from the ammonia injector 13 and the amount of reformed gas which is injected from the reformed gas injector 36 are increased and the air-fuel ratio is made rich. Next, at step 95, secondary air is fed from the secondary air feed valve 38.

### Reference Signs List

5 combustion chamber
7 intake valve
8 intake port
13 ammonia injector
19 exhaust purification catalyst
20 reformer
21 vaporizer
23 fuel tank
27 ammonia gas tank
35 reformed gas storage tank
36 reformed gas injector
37 secondary air feed device
40 auxiliary fuel feed valve

## Claims

1. An ammonia burning internal combustion engine which uses ammonia as fuel, wherein a reformer which reforms ammonia to produce reformed gas which contains hydrogen is provided, the reformed gas is fed to an inside of a combustion chamber in addition to ammonia, an exhaust purification catalyst is arranged in an engine exhaust passage, a secondary air feed device is arranged in the engine exhaust passage upstream of the exhaust purification catalyst, an ammonia ratio which shows a ratio of an amount of fed ammonia to a total amount of fed fuel after completion of warmup is preset in accordance with an operating state of the engine, and when a reforming ability of the reformer is less than a predetermined reforming ability, the ammonia ratio is made to increase to more than the ammonia ratio after completion of warmup which is preset in accordance with the operating state of the engine, and secondary air is fed from a secondary air feed device to inside the engine exhaust passage upstream of the exhaust purification catalyst.

2. The ammonia burning internal combustion engine as claimed in claim 1, wherein the ammonia ratio after completion of warmup is preset as a function of engine load and engine speed.

3. The ammonia burning internal combustion engine as claimed in claim 1, wherein when the reforming ability of the reformer is less than the predetermined reforming ability, engine load is made to increase and an ammonia feed amount is made to increase.

4. The ammonia burning internal combustion engine as claimed in claim 1, wherein when the reforming ability of the reformer is less than the predetermined reforming ability, an air-fuel ratio is made rich.

5. The ammonia burning internal combustion engine as claimed in claim 1, wherein when the reforming ability of the reformer becomes more than the predetermined reforming ability, an air-fuel ratio is made lean until the exhaust purification catalyst is activated and auxiliary fuel is fed into the engine exhaust passage upstream of the exhaust purification catalyst.

6. The ammonia burning internal combustion engine as claimed in claim 1, wherein when the reforming ability of the reformer becomes more than the predetermined reforming ability, secondary air and auxiliary fuel are fed into the engine exhaust passage upstream of the exhaust purification catalyst until the exhaust purification catalyst is activated.

7. The ammonia burning internal combustion engine as claimed in claim 1, which an ammonia concentration in the exhaust gas which is exhausted from the combustion chamber is detected, and when the ammonia concentration exceeds a predetermined allowable concentration, secondary air is fed into the engine exhaust passage.

8. The ammonia burning internal combustion engine as claimed in claim 1, wherein when a temperature of the exhaust purification catalyst exceeds a predetermined limit temperature, an air-fuel ratio is made rich and secondary air is fed into the engine exhaust passage.
